# EUROPEAN PATENT APPLICATION

(11) **EP 4 525 376 A1**
(43) Date of publication of application: **19.03.2025**
(21) Application number: 24201041.1
(22) Date of filing: 18.09.2024
(51) Int. Cl.: H04L 12/40, B60W 50/00

(54) **VEHICULAR CONTROL UNIT COMPRISING A PARTITIONING SYSTEM OF SAFETY-RELEVANT NETWORK LINES AND RELATED ROAD VEHICLE**

(30) Priority: 18.09.2023 IT 202300019110
(71) Applicant: FERRARI S.p.A., 41100 Modena (IT)
(72) Inventor: ROMAGNOLI, Riccardo, 41100 Modena (IT); DI NARDO, Lorenzo, 41100 Modena (IT); LANZILLOTTA, Edmondo, 41100 Modena (IT)
(74) Representative: Studio Torta S.p.A.

(57) **Abstract**

Vehicular control unit (12) comprising a processing device (13); a communication device (15) bidirectionally connected to the processing device (13) and to the vehicular network (11); an auxiliary processing device (17); wherein the communication device (15) is configured to operate selectively between a transmission mode, in which it can communicate bidirectionally with the vehicular network (11), and a standby mode, in which it can only receive from the vehicular network (11); the control unit (12) comprising a partitioning system (19), which, in the event of a failure of the processing device (13) or of the auxiliary processing device (17), is configured to constrain the communication device (15) in the standby mode.

## Description

### CROSS-REFERENCE TO RELATED APPLICATIONS

This patent application claims priority from Italian patent application no. 102023000019110 filed on September 18, 2023, the entire disclosure of which is incorporated herein by reference.

### STATE OF THE ART

The present invention relates to a vehicular control unit comprising a partitioning system of safety-relevant network lines and to a related road vehicle.

More specifically, the present invention finds advantageous, but not exclusive, application in a high-performance road vehicle (e.g. fully electric or hybrid), to which the following description will make explicit reference without thereby losing generality.

### CONTEXT OF THE INVENTION

Hybrid or electric vehicles (EV/PHEV/BEV) are known which are provided with at least one electric machine, which is electrically connected to an electrical energy storage system, namely, a battery pack, and is mechanically connected to the driving wheels to transmit driving torque to the same.

The electrical system of a hybrid or electric vehicle usually comprises a high voltage (relatively speaking, it could also have a nominal voltage of only 48 Volts) and high power electrical circuit to which the electric machine is connected; the high voltage electrical circuit comprises a storage device (provided with at least one electrochemical battery pack, for example lithium ion or lithium polymer), and a bidirectional direct-alternating electronic power converter which is connected to the storage device on the direct current side and connected to the electric machine on the alternating current side and has the function of driving the electric machine.

The electrical system of said vehicles comprises, furthermore, a low-voltage electrical circuit (generally with a nominal voltage of 12 Volts) to which all the auxiliary electrical services are connected; for example, the control units of all the vehicle subsystems, the infotainment system, the anti-theft system, the passenger compartment lighting system, the external lights, the electric starter motor of the internal combustion engine in the case of hybrid vehicles, etc.

Among other things, the low-voltage electrical circuit normally also comprises the so-called BMS (Battery Management System) of the high-voltage storage device.

The low-voltage electrical circuit also powers one or more vehicular control units, also known as VCU (*vehicular control unit*), which are conceptually arranged immediately below the safety layer and act as an interface between the various control units and their respective systems. Said control units are responsible for controlling communication between the various vehicle systems. Said communications occur by means of one or more known networks, such as the CAN (Controller Area Network), LIN (Local Interconnect Network), Ethernet or other networks, which require specific communication lines with the aforementioned control units.

The aforementioned control units VCU are subject to increasingly stringent safety requirements, as they govern, for example, the CAN lines that communicate with safety-relevant actuators, such as the aforementioned electric machine, brakes, steering wheels, active suspensions, other vehicle electric motors, etc.

The importance of managing any malfunctions (electronic or software) internal to said control units is evident.

To date, once a malfunction of the control unit is detected, a reset signal is sent to a microcontroller inside the control unit that regulates communication in normal operation, assuming that said microcontroller will consequently stop transmitting signals outside the control unit, without however having the certainty of this. In fact, said method of interrupting communications does not cover all possible modes of system malfunction.

For example, in the vehicles denoted above, in order to prevent problems for the safety of the vehicle or of those on board or nearby, for example in critical cases such as electronic malfunctions or cyber-attacks, it is particularly important to interrupt the output communication from the VCU to the control units of the various vehicle systems, so that the latter do not receive incorrect instructions that may lead to unwanted and unsafe vehicle behaviour.

In general, there is therefore a need to improve the protection of safety-relevant communication networks. At the same time, it remains important to avoid overloading the domain control units, which in any case have a limited number of communication lines. Furthermore, being critical components, it is also important not to distort the previously validated architecture.

### SUMMARY OF THE INVENTION

The purpose of the present invention is to provide a vehicular control unit comprising a partitioning system of the safety-relevant network lines and a related road vehicle, which are at least partially free from the drawbacks described above and, at the same time, are simple and inexpensive to produce.

According to the present invention, a vehicular control unit comprising a partitioning system of the safety-relevant network lines and a related road vehicle are provided, as claimed in the independent claims that follow and preferably, but not necessarily, in any one of the claims directly or indirectly dependent on the independent claims.

The claims describe preferred embodiments of the present invention forming an integral part of the present description.

### BRIEF DESCRIPTION OF THE DRAWINGS

Hereinafter, some embodiments of the invention will be described for a better understanding thereof by way of non-limiting example and with reference to the attached figures, wherein:
- Figure 1 is a perspective and schematic view, with details removed for clarity, of a road vehicle according to an embodiment of the present invention;
- Figure 2 is a schematic view of a non-limiting embodiment of a part of an electrical system of the road vehicle of Figure 1.

### EMBODIMENTS OF THE INVENTION

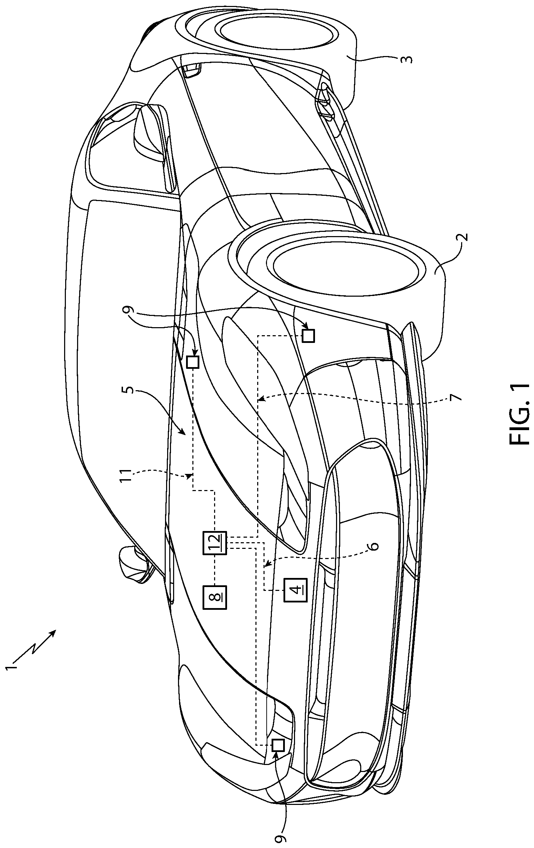

In Figure 1, number 1 generically denotes, as a whole, a road vehicle provided with two front wheels 2 and two rear wheels 3, of which at least one pair (or all) receive the driving torque from an electric or hybrid powertrain system 4. The powertrain system 4 is preferably exclusively electric (namely, it comprises only one or more electric motors) or hybrid (namely, it comprises an internal combustion engine and at least one electric motor).

The same numbers and the same reference letters in the figures identify the same elements or components with the same function.

In the context of the present description, the term "second" component does not imply the presence of a "first" component. Said terms are in fact used as labels to improve clarity and should not be considered in a limiting manner.

The elements and characteristics illustrated in the various preferred embodiments, including the drawings, can be combined with one another without, however, departing from the scope of protection of the present application as described in the following.

In particular, the road vehicle 1 comprises an electrical system 5 comprising a high voltage electrical circuit 6 HV (in a relative sense), for example, but not limited to, having a nominal voltage of 800 or 400 or 48 Volts, and a low voltage LV electrical circuit 7 and, for example, having a nominal voltage of 12 Volts.

It is important to underline that the electrical circuit 6 is referred to as "high voltage" as it has a nominal voltage (800 V, 400 V, 48 V) greater than the nominal voltage (12 V) of the electrical circuit 7, namely, the definition of "high voltage" is to be considered as referring only to the electrical system 5 and with reference to the electrical circuit 7 having a nominal voltage of 12 Volts.

According to some preferred non-limiting embodiments, the low voltage LV electrical circuit 7 comprises an electrical energy storage system 8 (also obviously with the same voltage as the electrical circuit 7), namely, a battery, for example of the lead or lithium-ion type. Furthermore, the low voltage LV electrical circuit 7 comprises a plurality of electrical loads 9, each of which is only capable of absorbing electrical energy for its own operation (namely, none of said electrical loads 9 is capable of generating electrical energy). In other words, the storage system 8 is configured to power the plurality of electrical loads 9.

Advantageously but not necessarily, the continuous electrical loads 9 comprise for example an alarm system, an infotainment system, electronic control units such as inverters and/or BMS and/or steer by wire, active suspensions, external lights, an air conditioning system (not illustrated), the operation of the windows, the car radio, the navigation system, etc. As highlighted in the introductory part of the present description, some electrical loads 9 (for example by means of the CAN network described below) are safety-relevant actuators 10, such as an electric vehicle for vehicular movement, brakes, steering wheels, active suspensions, etc.

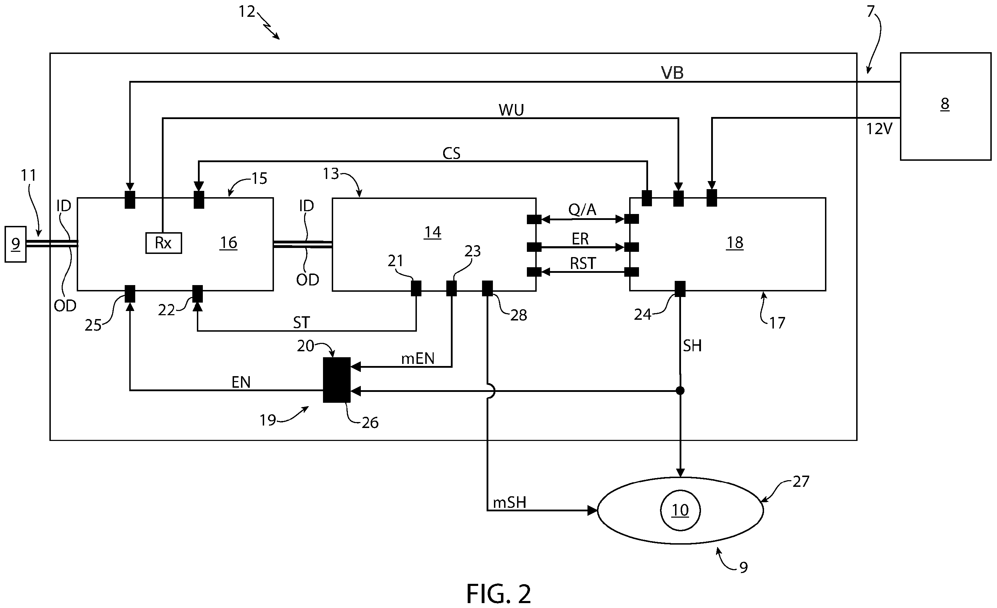

Furthermore, the road vehicle 1 comprises a vehicular network 11, which can be based on one or more communication protocols of a known type and not further detailed, such as CAN (illustrated in the non-limiting embodiment of Figure 2), LIN or Ethernet. Obviously, other types of vehicular networks or a combination of those mentioned above can also be used.

The vehicular network 11 is configured to put the aforementioned electrical loads 9 in communication (data) with respective control units (of a known type and not further detailed in the following) and the latter with at least one control unit 12 of the type described in the following.

The road vehicle 1 in fact comprises a control unit 12, which is powered by the low voltage electrical circuit 7, in particular by the storage system 8.

The control unit 12 is preferably a domain control unit (also known as *Vehicle Control Unit* or simply VCU), in particular for the connection of the vehicular network 11, more specifically, for example, of the CAN network. In detail, the control unit 12 manages the communication on the vehicular network 11 of other vehicular control units arranged at a lower logic level. In other words, the VCU 12 acts as a domain controller for the road vehicle 1, preferably electric or hybrid. For example, but not limited to, the control unit 12 is configured to read signals from sensors installed on the vehicle, such as brakes, HVIL or the connection to the battery charger, and act accordingly to balance the system energy, optimize the torque, control the engine (namely, the electric machine), the high voltage (HV) battery pack and the on-board charging system until the battery charger is blocked.

The control unit 12 comprises three macro-elements.

The first macro-element is a processing device 13, in particular a microcontroller 14, which is configured and programmed to process, during normal operation, a set of output data OD according to a set of input data ID from at least one vehicular network 11.

The second macro-element is a communication device 15, in particular a transceiver 16, which is bidirectionally connected to the processing device 13 and to the vehicular network 11.

The communication device 15 is configured to receive the input data ID from the at least one vehicular network 11 and to transmit the same to the processing device 13, and to receive the output data OD from the processing device and to transmit the same to the vehicular network 11. In other words, the communication device 15 represents the circuitry that allows the microcontroller 14 to work and communicate on the vehicular network 11 (for example on the CAN network) towards the rest of the road vehicle 1, therefore towards the electrical loads 9.

The third macro-element is an auxiliary processing device 17, in particular an auxiliary/companion chip 18, which supervises the operation of the processing device 13 and the power supply of the communication device 15.

The communication device 15 is also configured to operate selectively between a transmission mode ST, in which it is free to communicate bidirectionally with the vehicular network 11 (during normal functional operation), and a standby mode, in which it can only receive signals from the vehicular network 11 (with the vehicle turned-off, for example following a key cycle, or in the event of problems with the processing device 13, as will be seen in the following).

Advantageously, the control unit 12 comprises a partitioning system 19 of at least some lines of the vehicular network 11 that are safety-relevant.

The partitioning system 19 is configured so as to constrain, in the event of a failure of the processing device 13 or of the auxiliary processing device 17, the communication device 15 in the (only) standby mode. In other words, in the event that there is a malfunction in either or both the microcontroller 14 and the companion chip 18, the partitioning system 19 blocks the output transmission from the communication device 15. In this way, the spreading of unguaranteed messages to other vehicular control units or to the electrical loads 9 that could undermine the safety of the road vehicle 1 is avoided.

As previously mentioned, therefore, the control unit 12 is preferably a VCU control unit that also operates in terms of functional safety. Therefore, the information exchanged on the vehicular network 11 can be of significant value for the safety of the vehicle and its users. Due to the partitioning system 19, the output communication from the unit 12, therefore the transmission of the transceiver 16, can be enabled or disabled selectively depending on the health status of the control unit 12, in particular of the microcontroller 14. Therefore, if the microcontroller 14 does not show a positive health status due to a (hardware) malfunction, the same is prevented from sending incorrect information or instructions to the rest of the road vehicle 1.

Advantageously, but not limited to, the partitioning system 19 comprises a logical operator 20 comprising two inputs connected respectively to the processing device 13 and to the auxiliary processing device 17 and an output connected to the communication device 15.

In particular, the partitioning system 19 comprises a first output 21 (physical, namely, a pin) on the processing device 13 and a first input 22, connected to the first output 21, on the communication device 15. The first input 22 is configured to receive from the first output 21 an enabling reception signal ST for the communication device 15 from the vehicular network 11, namely, to enable at least the standby mode. In this way, it is possible to both improve energy consumption and avoid the reception and not only the sending of unwanted messages to the control unit 12, in particular to the processing device 13.

Preferably, but not limited to, the enabling signal ST is a hardware signal, namely, a binary signal transmitted by means of an electric cable or a track.

According to the preferred non-limiting embodiment of Figure 2, the partitioning system 19 comprises, on the processing device 13, a second output 23 for an enabling transmission signal mEN, and comprises, on the auxiliary processing device 17, a third output 24 for a positive health status signal SH (general, in particular of the processing device 13 or of the power supply of the auxiliary processing device 17). In detail, the signals emitted by the second output 23 and by the third output 24 converge in the logical operator 20, which provides as output an enabling signal EN from the same.

In particular, the partitioning system 19 comprises, on the communication device 15, a second input 25 connected to the logical operator 20 to receive the enabling signal EN, which is configured to enable transmission towards the vehicular network 11 by means of the communication device 15, or to enable the transmission mode, exclusively in the co-presence of the enabling transmission signal mEN from the processing device 13, namely, from the microcontroller 14, and the positive health status signal SH, namely, from the companion chip 18.

Advantageously, but not limited to, according to what was described above, the logical operator 20 is an AND port 26. Obviously, it is possible, in the case of negated logics for the mEN and SH signals, to also use additional or different operators that substantially achieve the same purpose previously described, namely, to be able to selectively disable the output transmission of the transceiver 16 towards the vehicular network 11 in the event of malfunctions of the microprocessor 14 or of the companion chip 18 (for example due to a non-correct/non-sufficient power supply, to faults).

Advantageously, but not limited to, the low voltage circuit 7 is directly connected to the auxiliary processing device 17 and to the communication device 15. In particular, as previously mentioned, the auxiliary processing device 17 supervises the correct power supply of the control unit 12.

In particular, the vehicle 1 comprises a plurality of safety-relevant actuators 10, which power supply is dependent on both a positive health status signal mSH (voluntary, namely, used to voluntarily disable the power supply to the actuators 10) from the power supply processing device 13, and on the positive health status signal SH exiting the auxiliary processing device 17.

Preferably, but not limited to, the auxiliary processing device 17 provides a communication power supply signal CS, which allows the communication device 15 to have a stable power supply and to be able, in particular always to be supplied with power in reception even in the event of inoperability of the microcontroller 14.

According to the preferred but non-limiting embodiment of Figure 2, the third output 24 can be connected (directly, in hardware mode) to a turn-off system 27 for the vehicular safety actuators 10, which is configured to turn-off, namely, to interrupt the power supply to, at least part of the vehicular safety-relevant actuators 10 in the event of a missing positive health status signal SH. Missing said signal can occur, for example, in the event of problems with the storage system 8 or with a respective power cable; in said cases, in case of doubt that the control unit 12 may not be working correctly, the turn-off system 27 is activated by the mSH or SH signals, which disables the safety-relevant actuators 10 (for example by limiting or interrupting the power supply thereof).

In the non-limiting embodiment of Figure 2, the processing device 13 comprises a fourth (specific and separate) output 28 for the positive health status signal mSH; the fourth output 28 can be connected to the turn-off system 27 of the vehicular safety actuators 10, which turns off/disables at least part of the vehicular safety actuators 10 in the event of a missing positive health status signal mSH (or positive health status signal SH).

According to some preferred non-limiting and non-illustrated embodiments, the control unit 12 comprises a plurality of communication devices 15 (for which what has been stated so far remains valid, mutatis mutandis), which are connected at least in part to the same partitioning system 19 which, in the event of an anomaly in the processing device 13 or in the auxiliary processing device 17, constrains the plurality of communication devices 15 in standby mode.

In other words, what is described above is to be considered adjustable.

By way of example, the control unit 12 can comprise six or seven communication devices 15, some or all of which are disabled for external transmissions when, for example, the microcontroller 14 does not have guaranteed operation. Obviously, the communication devices 15 can all belong to the same vehicular network 11, such as a CAN network, or to different networks 11.

Therefore, preferably but not limited to, when the microcontroller 14 does not operate correctly, by means of the mEN signal, it is possible to selectively turn off the transceivers 16 that is preferred to be disconnected at that moment. Otherwise, in the case in which it is the companion chip 18 that cannot operate correctly, in a guaranteed manner, the latter simultaneously turns off all the transmissions of the control unit 12, thus ensuring that the entire component goes to a safe state at vehicle level.

According to further non-limiting and not-illustrated embodiments, for example to save resources on the control unit, some, or all of the connections of the partitioning system 19 can be actual BUSes internal to the control unit 12. In this way, it is possible to group the commands towards multiple communication devices 15 under a single line.

Advantageously, but not limited to, the SH and mSH signals are hardware signals controlled by the companion chip 18 and the microcontroller 14, respectively.

Therefore, according to what has been described and with the illustrated embodiments, both the microcontroller 14 and the companion chip 18 provide the SH and mSH signals that allow the (safety relevant) actuators 10 to be turned off; however, since this may not be sufficient, the safety level is further increased by the fact that the communication port of the control unit, or the communication device 15, is prevented from external transmission precisely to avoid sending incorrect information if the microcontroller 14 or the companion chip 18 are not completely indicating a positive health status.

Advantageously, but not limited to, the communication device 15 is configured to receive from the vehicular network 11 a wake-up signal WU, which is transmitted to the auxiliary processing device 17 that in turn sends a reset signal RST to the processing device 13, so that it can exit the standby mode by entering the transmission mode. In other words, the control unit 12, in the event of problems or malfunctions, is sure not to transmit incorrect messages or instructions to the outside thereof, but remains in a condition able to receive from the outside, allowing successive wake-up commands. In the non-limiting embodiment of Figure 2, to ensure the power supply of the communication device 15 even in the event of a malfunction of the microprocessor 14, the communication device 15 preferably receives a power supply signal VB from the storage system 8 and a communication power supply signal CS from the companion chip 18. In this way, it is the companion chip 18 that interrupts the power supply to the communication device 15 and therefore controls and verifies the same, preferably cyclically. In this way, communication (in input) from the communication device 15 is made possible independently of the processing device 13.

Preferably but not limited to, when the power supplies are stable, the microcontroller 14 can control the operating state of the transceiver 16 by way of two signals, ST and EN, the latter puts the transceiver 16 in a condition of being able to only receive, while the enabling EN enables the operation of the transceiver 16 in all respects, even in transmission.

According to what has been described above, therefore, the transmission turn-off is guaranteed, which however is not permanent, but can be resumed following, for example, the will of the driver, who, through a key cycle or other actions can trigger the wake-up signal WU and therefore the reset RST of the microcontroller 14.

According to the preferred but not limiting embodiment of Figure 2, the companion chip 18 is said device that allows on the one hand to guarantee the correct power supply of the control unit 12 (for example by means of the signal CS) and on the other hand has a monitoring function relative to the microcontroller 14.

In detail, therefore, the companion chip 18 continuously checks whether the microcontroller 14 is working correctly. This is done by way of an exchange of signals Q\A of a known type, so-called question/answer and schematically illustrated in the embodiment of Figure 2. In other words, the companion chip 18 continuously interrogates the microcontroller 14 and expects given responses from the latter. When microcontroller 14 fails to respond or fails to respond properly, the companion chip 18 reacts by signalling, by means of the positive health status signal SH (namely, by disabling the positive health status signal SH, thus indicating that a positive health status is no longer present).

In this way, in use, the companion chip 18 asserts that whatever the microcontroller 14 is doing is not guaranteed and therefore intervenes by turning off the safety-relevant actuators 10 and disabling the output transmission of the transceiver 16, so that output messages from the malfunctioning microcontroller 16 are promptly blocked.

In the non-limiting embodiment of Figure 2, the companion chip 18 can also receive from the microcontroller 14 an error signal ER, which is provided by a sophisticated preserved (safety) logic internal to the microcontroller 14. This error signal ER, used for example in the case in which the microcontroller detects a problem, allows to always generate a safe reaction of the type described above by means of the companion chip 18.

As previously mentioned, in the non-limiting embodiment of Figure 2, the companion chip 18 can also send the aforementioned reset signal RST to the microcontroller 14, which normally starts the wake-up of the microcontroller 14 (at power-on and following a previous constraint to only the standby configuration described above). In particular, when the companion chip 18 recognises that at the control unit system level everything is in order, it allows the microcontroller 14 to start or resume its normal activity.

Although the invention described above makes particular reference to a very specific embodiment, it is not to be considered limited to said embodiment, since its scope comprises all those alternatives, modifications or simplifications covered by the attached claims, such as for example a different type of storage systems, processing or transmission devices, signals exchanged with the same purpose as those described, etc.

The embodiments described herein can be combined with one another without departing from the scope of protection of the present invention.

The advantages associated with the control unit and the related road vehicle 1 are significant and obvious.

First of all, the safety of the control unit is improved in absolute terms, avoiding the propagation of incorrect messages, in addition, providing for the turn-off/disabling of the safety-relevant actuators.

Furthermore, it is made possible to optimize the microcontroller resources dedicated to the management of communication networks. For example, with a number X of vehicular networks connected in groups Y (with Y<X) the pins dedicated to the ST and EN signals are reduced from 2*Y to 2*X. For example, 10 communication networks connected in two groups require four pins instead of twenty on the microcontroller 14.

### LIST OF THE REFERENCE NUMBERS OF THE FIGURES

1 road vehicle
2 front wheels
3 rear wheels
4 powertrain system
5 electrical system
6 high-voltage electrical circuit
7 low-voltage electrical circuit
8 storage system
9 electrical loads
10 safety-relevant actuators
11 vehicular network
12 control unit
13 processing device
14 microcontroller
15 transmission device
16 transceiver
17 auxiliary processing device
18 companion chip
19 partitioning system
20 logical operator
21 first output
22 first input
23 second output
24 third output
25 second input
26 AND port
27 turn-off system
28 fourth output
CS communication power supply
EN enable signal
ER error signal
ID input data
mEN transmit enable signal
mSH voluntary positive health status signal
OD output data
RST reset signal
SH positive health status signal
ST reception enable signal
VB power signal
WU wake-up signal

## Claims

1. A vehicular control unit (12) comprising:
- a processing device (13), in particular a microcontroller (14), which is configured and programmed to process, during normal operation, a set of output data (OD) according to a set of input data (ID) from at least one vehicular network (11);
- a communication device (15), in particular a transceiver (16), bidirectionally connected to the processing device (13) and to the vehicular network (11); wherein the communication device (15) is configured to receive the input data (ID) from the at least one vehicular network (11) and transmit the same to the processing device (13), and to receive the output data (OD) from the processing device (13) and transmit the same to the vehicular network (11);
- an auxiliary processing device (17), in particular a companion chip (18), which supervises the operation of the processing device (13) and the power supply to the communication device (15);
wherein the communication device (15) is configured to operate selectively between a transmission mode, in which it can communicate bidirectionally with the vehicular network (11), and a standby mode, in which it can only receive from the vehicular network (11);
the control unit (12) comprising a partitioning system (19), which, in the event of a failure of the processing device (13) or of the auxiliary processing device (17), is configured to constrain the communication device (15) in the standby mode;
wherein the partitioning system (19) comprises a first output (21) on the processing device (13) and a first input (22), connected to the first output (21), on the communication device (15); the first input (22) being configured to receive from the first output (21) an enabling reception signal (ST) for the communication device (15) from the vehicular network (11), namely, to enable at least the standby mode.

2. The control unit (12) according to claim 1, wherein the partitioning system (19) comprises a logical operator (20), which is connected in input to the processing device (13) and to the auxiliary processing device (17) and in output to the communication device (15) .

3. The control unit (12) according to claim 1 or 2, wherein the partitioning system (19) comprises, on the processing device (13), a second output (23) for an enabling transition signal (mEN) and comprises, on the auxiliary processing device (17), a third output (24) for a positive health status signal (SH) of the auxiliary processing device (17); the second output (23) and the third output (24) converging into the logical operator (20), which provides as output an enabling signal (EN) from the same;
wherein the partitioning system (19) comprises, on the communication device (15), a second input (25) connected to the logical operator (20) to receive the enabling signal (EN), which is configured to enable transmission to the vehicular network (11) for the communication device (15), namely, to enable the transmission mode, exclusively in the co-presence of the enabling transmission signal (mEN) and the positive health status signal (SH) of the auxiliary processing device (17).

4. The control unit (12) according to claim 3, wherein the logical operator (20) is an AND port (26).

5. The control unit (12) according to claim 3 or 4, wherein the third output (24) is connectable to a vehicular safety actuator turn-off system (27), which is configured to turn-off at least part of the vehicular safety-relevant actuators (10) in the event of a missing positive health status signal (SH) of the auxiliary processing device (17) .

6. The control unit (12) according to claim 5, wherein the processing device (13) comprises a fourth output (28) for a positive health status signal (mSH) of the processing device (13), the fourth output (28) being connectable to the vehicular safety actuator turn-off system (27), which turns off at least part of the vehicle safety actuators in the event of a missing positive health status signal (mSH) of the processing device (13).

7. The control unit (12) according to any one of the preceding claims and comprising a plurality of transmission devices, the transmission devices being at least partially connected to the same partitioning system (19) which, in the event of a failure of the processing device (13) or of the auxiliary processing device (17), constrains the plurality of transmission devices in the standby mode.

8. The control unit (12) according to any one of the preceding claims, wherein the communication device (15) is configured to receive from the vehicular network (11) a wake-up signal (WU), which is transmitted to the auxiliary processing device (17) that in turn sends a reset signal (RST) to the processing device (13), so as to be able to exit the standby mode by entering the transmission mode.

9. A road vehicle (1) comprising:
- four wheels (2, 3), of which at least one pair of wheels (2, 3) (2, 3) is driving;
- a powertrain system (4) preferably electric or hybrid;
- a low-voltage electric circuit (7), in particular comprising a low voltage storage system (8);
- a control unit (12) according to any one of the preceding claims, which is powered by the low-voltage electric circuit (7);
- a vehicular network (11), which connects the control unit (12) with one or more electrical loads (9).

10. The vehicle according to claim 9, wherein the low voltage circuit is directly connected to the auxiliary processing device (17) and to the communication device (15), wherein the auxiliary processing device (17) supervises the correct power supply of the control unit (12) .

11. The vehicle according to claim 9 or 10 and comprising a plurality of safety actuators, wherein the power supply is subjected to either a positive health status signal (mSH) of the processing device (13) exiting the processing power supply device or to a positive health status signal (SH) of the auxiliary processing device (17) exiting the auxiliary processing device (17).
